# EUROPÄISCHE PATENTSCHRIFT

(11) **EP 3 771 689 B1**
(45) Veröffentlichungstag und Bekanntmachung des Hinweises auf die Patenterteilung: **29.05.2024**
(21) Anmeldenummer: 20183492.6
(22) Anmeldetag: 01.07.2020
(51) Int. Cl.: C02F 1/00, C02F 5/00

(54) **GERÄTEVERBUND UND VERFAHREN ZUM DESSEN BETREIBEN**
DEVICE NETWORK AND ITS METHOD OF OPERATION
RÉSEAU D'APPAREILS ET PROCÉDÉ DE SON FONCTIONNEMENT

(30) Priorität: 30.07.2019 DE 102019211361
(43) Veröffentlichungstag der Anmeldung: 03.02.2021
(73) Patentinhaber: BSH Hausgeräte GmbH, 81739 München (DE)
(72) Erfinder: Mies, Maximilian, 83253 Rimsting (DE); Mathes, Anton, 83364 Neukirchen am Teisenberg (DE); Steffl, Michael, 83250 Marquartstein (DE)

(56) Entgegenhaltungen:
- EP-A1- 2 080 461
- DE-A1-102006 042 902
- US-A- 4 214 148
- US-A1- 2019 145 722

## Beschreibung

Die vorliegende Erfindung betrifft einen Geräteverbund und ein Verfahren zum Betreiben dieses Geräteverbunds mit zumindest zwei Geräten, insbesondere Haushaltsgeräten.

Ein Verfahren Betreiben eines Geräteverbunds mit zumindest zwei Geräten ist z. B. aus der US 2019/145722 A1 bekannt.

In einer Vielzahl von Anwendungen ist es erwünscht und notwendig, Wasser zu erhitzen. Zu diesen Anwendungen gehören Geräte, die insbesondere in Haushalten zum Einsatz kommen. Zu diesen Haushaltsgeräten zählen Kaffeemaschinen, Waschmaschinen, Spülmaschinen und dergleichen. Zum Erhitzen von Wasser kommen gewöhnlich Wassererhitzer zum Einsatz, welche elektrisch betrieben sind. Beim Erhitzen von Wasser kann Kalk anfallen und sich am Wassererhitzer und an anderen Bestandteilen des zugehörigen Geräts, beispielsweise Leitungen, Ventilen und dergleichen, ablagern. Die sogenannte Kalkablagerung führt einerseits zu einer Reduzierung der Effizienz des Wassererhitzers und kann zudem zu Funktionsstörungen führen. Die angefallene Menge an Kalk hängt dabei von der Wasserhärte des erhitzen Wassers ab.

Bei derartigen Wassererhitzern und den zugehörigen Geräten ist es üblich, eine Wasserhärte von Wasser manuell, insbesondere durch eine manuelle Eingabe, einzustellen. Abhängig von der manuell eingestellten Wasserhärte erfolgt dann eine Entkalkung des Wassererhitzers bzw. des zugehörigen Geräts. Ist die manuell eingestellte Wasserhärte höher als die tatsächlich vorhandene Wasserhärte, lagert sich im Betrieb weniger Kalk ab, so dass durch unnötige Entkalkungen des Wassererhitzers bzw. des zugehörigen Geräts ein erhöhter Aufwand und/oder erhöhte Kosten entstehen. Ist die manuell eingestellte Wasserhärte niedriger als die tatsächlich vorhandene Wasserhärte, fällt im Betrieb des Wassererhitzers bzw. des zugehörigen Geräts mehr Kalk ab, so dass es zu mehr Kalkablagerung kommt als vorgesehen und erlaubt. In der Folge kommt es zu einer Reduzierung der Effizienz des Wassererhitzers und/oder des Geräts sowie zu Störungen, insbesondere übermäßigen Verstopfungen, von Wasser oder Wasserdampf führender Komponenten.

Um eine übermäßige Kalkablagerung in Wassererhitzern und zugehörigen Geräten zu vermeiden, ist es, beispielsweise aus der EP 2 080 461 A1, der EP 1 129 653 A1, der DE 10 2006 042 902 A1, sowie der DE 10 2010 002 438 A1, bekannt, bei einer vorgegebenen Differenz in der vom Wassererhitzer erbrachten Leistung zum Heizen von Wasser auf eine übermäßige Verkalkung zu schließen und ein entsprechendes Entkalkungssignal zu erzeugen oder den Stillstand des Wassererhitzers bzw. des zugehörigen Geräts bis zur Entkalkung einzuleiten.

Die Erkennung der Verkalkung in derartigen Geräten ist aufwendig und bedarf in der Regel zusätzlicher Bestandteile und/oder Anpassungen der Bestandteile, welche die Geräte insgesamt teurer in der Herstellung machen.

Die vorliegende Erfindung beschäftigt sich daher mit der Aufgabe, zum Betreiben eines Geräteverbunds mit mehreren derartigen Geräten verbesserte oder zumindest andere Ausführungsform anzugeben, die sich insbesondere durch eine erhöhte Effizienz der Wassererhitzung und/oder eine erhöhte Lebensdauer der Geräte und/oder eine Reduzierung unzutreffender Einstellungen der Wasserhärte bei einem erhöhten Komfort für den Nutzer auszeichnet.

Diese Aufgaben werden erfindungsgemäß durch den Gegenstand der unabhängigen Ansprüche 1 und 4 gelöst. Vorteilhafte Ausführungsformen sind Gegenstand der abhängigen Ansprüche.

Die vorliegende Erfindung beruht auf dem allgemeinen Gedanken, in einem Geräteverbund mit zumindest zwei Geräten, welche jeweils im Betrieb Wasser heizen, die Härte des zu erhitzenden Wassers mit zumindest einem der Geräte zu ermitteln und an zumindest eines der anderen Geräte zu übermitteln. Somit ist es möglich, in zumindest einem Teil der Geräte des Verbunds auf eine eigene Ermittlung der Wasserhärte zu verzichten, so dass diese Geräte vereinfacht ausgestaltet werden können. Alternativ oder zusätzlich ist es möglich, die in verschiedenen Geräten ermittelten Wasserhärten miteinander zu kombinieren, um die Wasserhärte insgesamt besser zu ermittelten.

Dem Erfindungsgedanken entsprechend weist der Geräteverbund zumindest zwei Geräte auf. Im jeweiligen Gerät wird Wasser mit einem Wassererhitzer erhitzt. Das jeweilige Gerät weist dabei eine Kommunikationsschnittstelle zur Kommunikation mit anderen Geräten des Verbunds auf. In zumindest einem der Geräte wird dabei die Härte des zu erhitzenden Wassers ermittelt und über die Kommunikationsschnittstelle wenigstens einem anderen der Geräte des Geräteverbunds übermittelt.

Die Kommunikationsschnittstelle des jeweiligen Geräts kann sowohl zur kabelgebundenen und/oder drahtlosen Kommunikation mit anderen Geräten ausgestaltet sein, die Kommunikation also drahtlos und/oder drahtgebunden erfolgen.

Zweckmäßig ist es, wenn zumindest zwei der Geräte von der gleichen Wasserquelle gespeist sind, so dass von der gleichen oder vergleichbaren Wasserhärte für beide Geräte auszugehen ist. Bevorzugt sind alle Geräte des Geräteverbunds von der gleichen Wasserquelle gespeist.

Bei dem jeweiligen Gerät kann es sich prinzipiell um ein beliebiges handeln.

Insbesondere ist zumindest eines der Geräte ein Haushaltsgerät, wie beispielsweise eine Kaffeemaschine, eine Waschmaschine, eine Spülmaschine und dergleichen.

Bevorzugt wird in zumindest einem der Wassererhitzer die Wasserhärte von erhitztem Wasser durch die Kalkablagerung im Wassererhitzer ermittelt, so dass eine manuelle Hinterlegung der Wasserhärte nicht notwendig ist und/oder falsche manuelle Einstellungen der Wasserhärte korrigiert werden und/oder Änderungen der Wasserhärte während der Lebensdauer des Wassererhitzers berücksichtigt werden können. Genutzt wird hierbei die Kenntnis, dass Kalkablagerungen im Wassererhitzer zu einem erhöhten thermischen Widerstand zwischen dem Wassererhitzer und dem mit dem Wassererhitzer erhitzten Wasser führen, so dass mit zunehmender Kalkablagerung von dem Wasserheizer mehr thermische Arbeit zu leisten ist, um das Wasser zu heizen.

Bevorzugt wird dabei der Zuwachs dieses thermischen Widerstands und somit die Menge der Kalkablagerung mit der Menge des Wassers verglichen, die beim besagten Zuwachs mit dem Wassererhitzer erhitzt wurde, und aus diesem Vergleich die Wasserhärte des Wassers zu ermittelt. Das heißt, dass die Ermittlung der Wasserhärte im laufenden Betrieb des Wassererhitzers erfolgen kann so dass keine manuelle Einstellung und/oder Eingabe eines Nutzers zwingend notwendig ist. Somit wird der Komfort für den Nutzer erhöht. Darüber hinaus ist es hiermit möglich, die tatsächlich vorhandene Wasserhärte des Wassers zu berücksichtigen und/oder zu hinterlegen, so dass der Wassererhitzer und/oder ein zugehöriges Gerät weder zu früh noch zu spät entkalkt werden. Dies resultiert einerseits in einer erhöhten Effizienz des Wassererhitzers bzw. des zugehörigen Geräts und führt andererseits zu einer erhöhten Lebensdauer des Wassererhitzers und des zugehörigen Geräts.

Beim Ermitteln der Wasserhärte im Wassererhitzer wird bevorzugt zunächst eine vom Wassererhitzer verrichtete thermische Arbeit zum Erreichen einer Referenztemperatur im mit dem Wassererhitzer erhitzten Wasser bestimmt. Diese Bestimmung, die nachfolgend auch als Referenzbestimmung bezeichnet wird, dient als Referenz für die nachfolgende Überwachung zwecks Ermittlung der Wasserhärte. Bei der Überwachung wird die vom Wassererhitzer verrichtete thermische Arbeit zum Erreichen einer Temperatur im Wasser überwacht. Ebenso wird die vom Wassererhitzer erhitzte Wassermenge überwacht. Es erfolgt ein Vergleich zwischen der Referenz-Arbeit und der während der Überwachung jeweils bestimmten thermischen Arbeit. Entspricht eine Differenz zwischen der Referenz-Arbeit und der überwachten thermischen Arbeit einem vorgegebenen Wert, kann aufgrund dieser Differenz, die eine vorgegebene Kalkablagerung am Wassererhitzer voraussetzt, auf die Wasserhärte geschlossen werden. Dabei wird beim Erreichen der vorgegebenen Differenz, die nachfolgend auch als Arbeits-Differenz bezeichnet wird, die zugehörige Menge der Kalkablagerung ermittelt. Über die Überwachung der vom Wassererhitzer erhitzten Wassermenge wird zudem bestimmt, welche Wassermenge zwischen der Referenzbestimmung und dem Erreichen der Arbeits-Differenz insgesamt erhitzt wurde. Es wird also die Gesamtwassermenge bestimmt, welche der Wassererhitzer bei der Menge der Kalkablagerung erhitzt hat. Aus einem Vergleich zwischen der Menge der Kalkablagerung zwischen der Referenzbestimmung und dem Erreichen der Arbeits-Differenz und der Gesamtwassermenge zwischen der Referenzbestimmung und dem Erreichen der Arbeits-Differenz wird dann die Wasserhärte des mit dem Wassererhitzer erhitzten Wassers ermittelt.

Unter thermischer Arbeit ist vorliegend insbesondere diejenige Arbeit des Wassererhitzers zu verstehen, die durch eine für eine Dauer verrichtete Leistung des Wassererhitzers verrichtet wird, um das Wasser zu erhitzen.

Die Referenzbestimmung sowie die nachfolgende Überwachung können prinzipiell zu beliebigen Zeitpunkten während der Lebensdauer des Wassererhitzers umgesetzt werden. Insbesondere kann die Referenzbestimmung bei der Erstinbetriebnahme des Wasserkochers erfolgen. Ebenso ist es vorstellbar, die Referenzbestimmung bei Bedarf zu wiederholen, insbesondere bei Serviceintervallen usw. alternativ oder zusätzlich ist es möglich, die Referenzbestimmung beliebig oft zu wiederholen.

Die Überwachung erfolgt zweckmäßig im laufenden Betrieb des Wassererhitzers. Dabei wird die Überwachung vorteilhaft bei jedem der Heizvorgänge jeweils durchgeführt. Die Überwachung erfolgt also insbesondere während nach der Referenzbestimmung erfolgten Heizvorgängen, bei denen der Wassererhitzer eine Wassermenge heizt.

Bevorzugt sind Ausführungsformen, bei denen für die vorgegebene Arbeits-Differenz eine Tabelle hinterlegt ist, in der für verschiedene Gesamtwassermengen die zugehörige Wasserhärte hinterlegt ist. Das heißt, dass beim Erreichen der Arbeits-Differenz die Gesamtwassermenge bestimmt und mit dieser bestimmten Gesamtwassermenge durch die hinterlegte Tabelle eine einfache Ermittlung der Wasserhärte erfolgt. Dies führt zu einer erheblichen Vereinfachung der Ermittlung der Wasserhärte, so dass das Verfahren vereinfacht umgesetzt werden kann und/oder der Wassererhitzer bzw. das zugehörige Gerät vereinfacht und kostengünstig hergestellt werden können.

Selbstverständlich kann die Tabelle auch für zwei oder mehr vorgegebene Arbeits-Differenzen jeweils zugehörigen Gesamtwassermengen und für die zugehörigen Gesamtwassermengen die jeweils zugehörige Wasserhärte enthalten.

Prinzipiell kann der Wassererhitzer derart betrieben sein, dass das zu erhitzende Wasser zum Erhitzen mit dem Wassererhitzer in Kontakt gebracht wird und dort verbleibt. Der Wassererhitzer wird also insbesondere in der Art eines Tauchsieders und/oder eines Wasserkochers in einem Haushalt betrieben.

Vorstellbar ist es, dass das Wasser zum Erhitzen durch den Wassererhitzer strömt, der Wassererhitzer also in der Art eines Durchlauferhitzers ausgestaltet ist. In diesen Fällen wird vorzugsweise zum Überwachen der Wassermenge die durch den Wassererhitzer strömende und erhitzte Durchflussmenge von Wasser überwacht und aufgrund der Durchflussmenge auf die jeweilige Wassermenge bzw. Gesamtwassermenge geschlossen. Insbesondere entspricht die Gesamtwassermenge der Gesamtdurchflussmenge.

Bevorzugt ist es, wenn sowohl bei der Referenzbestimmung als auch bei der Überwachung das Wasser mit einer vorgegebenen Strömungsgeschwindigkeit durch den Wassererhitzer strömt. Durch die vorgegebene und somit konstante Strömungsgeschwindigkeit des Wassers kann die Gesamtwassermenge und/oder die Gesamtdurchflussmenge vereinfacht bestimmt werden, so dass das Verfahren insgesamt vereinfacht ist und/oder der Wassererhitzer bzw. das zugehörige Gerät vereinfacht und kostengünstig hergestellt werden können.

Bei vorteilhaften Ausführungsformen wird sowohl bei der Referenzbestimmung als auch bei der Überwachung dieselbe Temperatur des erhitzten Wassers vorgegeben. Das heißt insbesondere, dass sowohl die Referenztemperatur als auch die überwachte Temperatur einer Zieltemperatur entsprechen. Auch hiermit wird das Verfahren erheblich vereinfacht und/oder die Herstellung und/oder der Aufbau des Wassererhitzers bzw. des zugehörigen Geräts kostengünstiger und einfacher.

Bevorzugt ist es dabei, wenn bei der Referenzbestimmung eine vom Wassererhitzer verrichtete Leistung zum Erreichen der Zieltemperatur als Referenztemperatur in einer vorgegebenen Wassermenge und in einer vorgegebenen Dauer bestimmt wird. Diese Leistung, die nachfolgend auch als Referenz-Leistung bezeichnet wird, ist also diejenige Leistung, die der Wassererhitzer verrichtet, um in der vorgegebenen Wassermenge in einer vorgegebenen Dauer die Zieltemperatur zu erreichen. Bei der Überwachung wird ebenfalls für die vorgegebene Wassermenge die vom Wasser verrichtete Leistung zum Erreichen der Zieltemperatur in der vorgegebenen Dauer überwacht. Bei diesem Ausführungsbeispiel entspricht also die Änderung der Leistung der Änderung der verrichteten thermischen Arbeit. Durch die einander entsprechenden Dauern und Wassermengen während der Referenzbestimmung und der Überwachung kann nunmehr aufgrund der Änderung der vom Wassererhitzer verrichteten Leistung die Menge der Kalkablagerung ermittelt sowie die Gesamtwassermenge bestimmt und daraus die Wasserhärte ermittelt werden.

Bevorzugt ist es hierbei, wenn in der Tabelle für zumindest eine vorgegebene Leistungs-Differenz für verschiedene Gesamtwassermengen die zugehörige Wasserhärte hinterlegt ist, so dass wiederum in der Tabelle durch einen einfachen Vergleich der bestimmten Gesamtwassermenge die zugehörige Wasserhärte ermittelt werden kann.

Bevorzugt ist es ferner, wenn in diesem Fall die Strömungsgeschwindigkeit vorgegeben und somit konstant ist. Zusammen mit der vorgegebenen und somit konstanten Dauer entspricht also die bei der Referenztemperatur erhitzte Wassermenge derjenigen Wassermenge, die bei der Überwachung jeweils erhitzt wird, so dass die Gesamtwassermenge einfach bestimmt werden kann.

Alternativ ist es möglich, sowohl bei der Referenzbestimmung als auch bei der Überwachung den Wassererhitzer jeweils mit einer vorgegebenen und somit konstanten Leistung zu betreiben und die Dauer bis zum Erreichen einer vorgegebenen Temperatur in einer vorgegebenen Wassermenge zu berücksichtigen, um auf die Menge der Kalkablagerung zu schließen und durch einen Vergleich der zugehörigen Gesamtwassermenge die Wasserhärte zu ermitteln. Dabei wird also bei der Referenzbestimmung bei einer vorgegebenen Leistung des Wassererhitzers eine Referenz-Dauer bestimmt, bei der eine vorgegebene Wassermenge eine vorgegebene Temperatur, die nachfolgend als Soll-Temperatur bezeichnet wird, erreicht hat. Die Soll-Temperatur entspricht also der Referenztemperatur. Bei der Überwachung wird dabei die Dauer überwacht, bis der Wassererhitzer bei der vorgegebenen Leistung in der vorgegebenen Wassermenge die Soll-Temperatur erreicht. Erreicht die Differenz einen vorgegebenen Wert, ist also eine vorgegebene Dauer-Differenz zwischen der Referenz-Dauer und der überwachten Dauer erreicht, wird wiederum die Menge der Kalkablagerung ermittelt und daraus zusammen mit der Gesamtwassermenge die Wasserhärte ermittelt. Bei diesem Ausführungsbeispiel entspricht also die Änderung der Dauer bei einer konstanten Leistung der Änderung der verrichteten thermischen Arbeit.

Bevorzugt ist es hierbei, wenn in besagter Tabelle für zumindest eine vorgegebene Dauer-Differenz für unterschiedliche Gesamtwassermengen zugehörige Wasserhärten hinterlegt sind, so dass wiederum durch das Bestimmen der Gesamtwassermenge die Wasserhärte ermittelt werden kann.

Vorstellbar ist es ferner, bei sowohl während der Referenzbestimmung als auch während der Überwachung konstanter Leistung und konstanter Dauer die im Wasser erreichte Temperatur zu überwachen und beim Überschreiten einer vorgegebenen TemperaturDifferenz eine entsprechende Menge der Kalkablagerung zu ermitteln und durch das Heranziehen der überwachten Gesamtwassermenge die Wasserhärte zu bestimmen.

Die ermittelte Wasserhärte wird bevorzugt auch im Wassererhitzer und/oder im zugehörigen Gerät hinterlegt und bei der Entkalkung des Wassererhitzers bzw. des zugehörigen Geräts berücksichtigt. Insbesondere wird die ermittelte Wasserhärte herangezogen, um einem Nutzer ein notwendiges Entkalken zu signalisieren und/oder ein automatisiertes Entkalken durchzuführen.

Ist im Wassererhitzer und/oder dem zugehörigen Gerät bereits eine Wasserhärte hinterlegt und weicht die ermittelte Wasserhärte von diesem hinterlegten Wert ab oder ist eine Differenz zwischen der hinterlegten und der ermittelten Wasserhärte größer als ein vorgegebener Wert, so wird vorteilhaft die hinterlegte Wasserhärte durch die ermittelte Wasserhärte ersetzt.

Das Verfahren kann vor dem Ersetzen der hinterlegten Wasserhärte wiederholt werden, um Fehler zu reduzieren und/oder Schwankungen in der Wasserhärte zu berücksichtigen.

Es versteht sich, dass neben dem Verfahren auch der Geräteverbund an sich zum Umfang dieser Erfindung gehört.

Zumindest eines der Geräte, in denen die Wasserhärte ermittelt wird, weist erfindungsgemäß neben dem Wassererhitzer eine Wassermengenmesseinrichtung zum Bestimmen der vom Wassererhitzer im Betrieb erhitzten Wassermenge auf, die insbesondere als ein Durchflussmesser ausgebildet sein oder einen solchen Durchflussmesser aufweisen kann. Das Gerät weist erfindungsgemäß zudem eine Temperaturmesseinrichtung zum Bestimmen der Temperatur des vom Wassererhitzer erhitzten Wassers auf. Das Durchführen des Verfahrens erfolgt über eine Steuereinrichtung, die entsprechend ausgestaltet ist. Insbesondere ist in der Steuereinrichtung vorstehend erwähnte Tabelle bzw. Tabelle hinterlegt. Die Steuereinrichtung ist zum Durchführen des Verfahrens entsprechend programmiert und/oder enthält entsprechende Algorithmen und setzt diese um. Hierzu ist die Steuereinrichtung mit dem Wassererhitzer, der Wassermenge-Messeinrichtung und der Temperaturmesseinrichtung kommunizierend verbunden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen Schnitt durch ein Gerät mit einem Wassererhitzer,
- Fig. 2: ein Flussdiagramm zur Erläuterung der Ermittlung der Wasserhärte im Gerät,
- Fig. 3: eine stark vereinfachte, schaltplanartige Darstellung eines Geräteverbunds mit zumindest zwei Geräten.

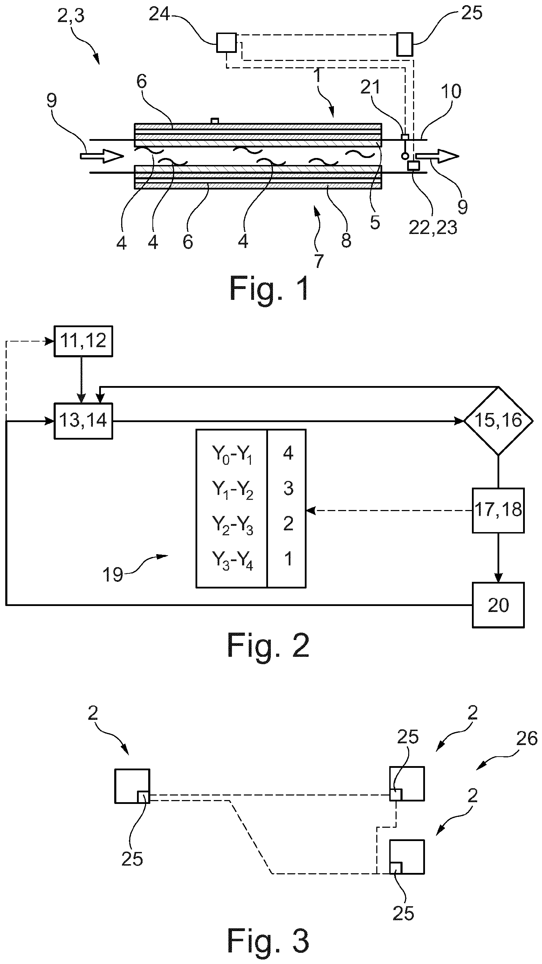

Ein Wassererhitzer 1, wie er beispielsweise in Figur 1 dargestellt ist, ist üblicherweise Bestandteil eines Geräts 2, insbesondere eine Haushaltsgeräts 3. Mit dem Wassererhitzer 1 erfolgt im Betrieb das Erhitzen von Wasser 4, das in Figur 1 durch gewellte Linien angedeutet ist. Wird das Wasser 4 erhitzt, so fällt Kalk an, der sich als in Figur 1 durch Balken angedeutete Kalkablagerung 5 absetzt. Die Kalkablagerung 5 wird zusammen mit der Änderung der benötigten thermischen Arbeit zum Erhitzen des Wassers 4 dazu verwendet, die Wasserhärte des Wassers 4 aus der Änderung der thermischen Arbeit sowie der Menge der Kalkablagerung 5 zusammen mit dem insgesamt vom Wassererhitzer 1 erhitzten Menge von Wasser zu bestimmen, wie nachfolgend beschrieben wird.

Der in Figur 1 gezeigte Wassererhitzer 1 weist rein beispielhaft Heizdrähte 6 zum Heizen des Wassers 4 auf, die durch Anlegen einer elektrischen Spannung und somit durch Erbringen einer elektrischen Leistung als Leistung des Wassererhitzers 1 das Wasser erhitzen. Die Heizdrähte 6 sind im gezeigten Beispiel Bestandteil eines Heizkörpers 7 und in einem Gehäuse 8 des Heizkörpers 7 eingebettet. Ein Strömungspfad 9 des Wassers 4 führt durch einen Kanal 10, an dem außenseitig der Heizkörper 7 den Kanal 10 umschließend oder umgebend angeordnet ist. Zum Erhitzen des Wassers 4 wird also Wärme von den Heizdrähten 6 über das Gehäuse 8 und über den Kanal 10 auf das Wasser 4 übertragen und das Wasser 4 somit erhitzt. Dabei kommt es auf der von dem Heizkörper 7 abgewandten Innenseite 11 des Kanals 10 zur besagten Kalkablagerung 5. Mit zunehmender Dicke der Kalkablagerung 5 und somit mit zunehmender Menge der Kalkablagerung 5 nimmt der thermische Widerstand zwischen dem Wassererhitzer 1, insbesondere dem Heizkörper 7 bzw. den Heizdrähten 6, und dem Wasser 4 zu. Die Zunahme des thermischen Widerstands ist also von der Menge der Kalkablagerung 5 abhängig. Um das Wasser 4 auf die gleiche Temperatur zu erhitzen, ist also mit zunehmender Kalkablagerung 5 eine erhöhte thermische Arbeit des Wassererhitzers 1, insbesondere des Heizkörpers 7, nötig. Im Umkehrschluss wird bei gleicher thermischer Arbeit des Wassererhitzers 1, insbesondere des Heizkörpers 7, mit zunehmender Menge der Kalkablagerung 5 das Wasser 4 weniger erhitzt und erreicht somit eine niedrigere Temperatur.

Zum Ermitteln der Wasserhärte des mit dem Wassererhitzer 1 erhitzten Wassers 4 wird, wie in Figur 2 mit Hilfe eines Flussdiagramms dargestellt, verfahren.

Es wird zunächst in einer ersten Verfahrensmaßnahme 11 eine Referenzbestimmung 12 durchgeführt. Bei der Referenzbestimmung 12 wird die vom Wassererhitzer 1 verrichtete thermische Arbeit zum Erreichen einer Referenztemperatur im mit dem Wassererhitzer 1 erhitzten Wasser 4 bestimmt, wobei diese bestimmte Arbeit nachfolgend auch als Referenz-Arbeit bezeichnet wird. Anschließend wird der Wassererhitzer 1 bei einer zweiten Verfahrensmaßnahme 13, nachfolgend auch als Überwachung 14 bezeichnet, überwacht. Bei der Überwachung 14 wird bei der Referenzbestimmung 12 nachfolgenden Heizvorgängen des Wassers 4 die vom Wassererhitzer 1 verrichtete thermische Arbeit zum Erreichen einer Temperatur im Wasser 4 sowie die vom Wassererhitzer 1 erhitzte Wassermenge überwacht. In einer weiteren, dritten Verfahrensmaßnahme 15, die nachfolgend auch als Vergleich 16 bezeichnet wird, wird die in der Referenzbestimmung 12 bestimmte Referenz-Arbeit mit der in der Überwachung 14 bestimmten thermischen Arbeit verglichen. Es wird insbesondere eine Differenz zwischen der Referenz-Arbeit und der überwachten thermischen Arbeit bestimmt. Ist diese Differenz kleiner als ein vorgegebener Wert, nachfolgend auch als Arbeits-Differenz bezeichnet, so kehrt das Verfahren zur zweiten Verfahrensmaßnahme 13 und zur Überwachung 14 zurück. Entspricht die Differenz der vorgegebenen Arbeits-Differenz oder ist die Differenz größer als die vorgegebene Arbeits-Differenz wird mit einer weiteren, vierten Verfahrensmaßnahme 17 fortgefahren. In der vierten Verfahrensmaßnahme 17, die nachfolgend auch als Ermittlung 18 bezeichnet wird, wird, aufgrund der Abhängigkeit der Arbeits-Differenz vom thermischen Widerstand und der Abhängigkeit des thermischen Widerstands von der Menge der Kalkablagerung 15, die zwischen der Referenzbestimmung 12 und der Vergleichsmaßnahme 16 angefallene Menge der Kalkablagerung 5 ermittelt. Diese ermittelte angefallene Menge der Kalkablagerung wird mit der Gesamtwassermenge von Wasser 4 verglichen, die zwischen der Referenzbestimmung 12 und dem Erreichen bzw. Überschreiten der Referenz-Arbeit durch den Wassererhitzer 1 erhitzt wurde. Durch den Zusammenhang zwischen der Menge der Kalkablagerung 5 und der Gesamtwassermenge wird dann die Wasserhärte bestimmt. Bevorzugt ist bei der Ermittlung 18 bzw. für die vierte Verfahrensmaßnahme 17 eine in Figur 2 neben dieser Verfahrensmaßnahme 17 angedeutete Tabelle 19 hinterlegt. Die Tabelle 19 enthält für zumindest die vorgegebene Arbeits-Differenz und verschiedene Gesamtwassermengen jeweils zugehörige Wasserhärten. In der gezeigten Tabelle 19 sind in der linken Spalte nacheinander steigende Bereiche der Gesamtwassermengen und in der rechten Spalte die jeweils zugehörige Wasserhärte angedeutet. Demnach beträgt die Wasserhärte gemäß der beispielshaft gezeigten Tabelle 19 rein beispielhaft 4, wenn die Gesamtwassermenge zwischen Y0 und Y1 liegt, 3, wenn die Gesamtwassermenge zwischen Y1 und Y2 liegt, 2, wenn die Gesamtwassermenge zwischen Y2 und Y3 liegt, und 1, wenn die Gesamtwassermenge größer als Y3 ist, insbesondere zwischen Y3 und Y4 liegt. Das heißt, dass mit steigender Gesamtwassermenge kleinere Wasserhärten vorliegen. Ist die Wasserhärte ermittelt, kann das Verfahren in einer weiteren, fünften Verfahrensmaßnahme 20 die ermittelte Wasserhärte hinterlegen und/oder eine bereits hinterlegte Wasserhärte überschreiben bzw. ersetzen und/oder ein Signal zum Entkalken des Wassererhitzers 1 bzw. des zugehörigen Geräts 2 erzeugen und/oder ausgeben.

Das vorstehend beschriebenen Verfahren kann derart durchgeführt werden, dass sowohl bei der Referenzbestimmung 12 als auch bei der Überwachung 14 jeweils diejenige Leistung des Wassererhitzers 1, insbesondere des Heizkörpers 7, bestimmt wird, mit der der Wassererhitzer 1 in einer vorgegebenen Dauer bei einer vorgegebenen Wassermenge eine vorgegebene Temperatur, nachfolgend auch Zieltemperatur genannt, erreicht. Das heißt, dass bei der Referenzbestimmung 12 eine Referenz-Leistung für die Zieltemperatur als Referenztemperatur und für die vorgegebene Wassermenge für die vorgegebene Dauer bestimmt wird. Bei der Überwachung 14 wird die Leistung des Wassererhitzers 1 bestimmt, mit der für die vorgegebene Wassermenge die Zieltemperatur in der vorgegebenen Dauer erreicht ist. Dementsprechend entspricht die Arbeits-Differenz einer Leistungs-Differenz, so dass beim Vergleich 16 die Differenz der Referenzleistung mit der überwachten Leistung mit einer vorgegebenen Leistungs-Differenz verglichen und beim Erreichen oder Überschreiten der vorgegebenen Leistungs-Differenz die Ermittlung 18 durchgeführt wird, wobei in diesem Fall vorzugsweise in der Tabelle 19 für zumindest eine vorgegebene Leistungs-Differenz für verschiedene Gesamtwassermengen jeweils zugehörige Wasserhärten hinterlegt sind.

Bei einer weiteren Alternative erfolgt sowohl bei der Referenzbestimmung 12 als auch bei der Überwachung 14 das Erhitzen des Wassers 4 mit der gleichen Leistung für die gleiche Wassermenge, wobei die Dauer berücksichtigt wird, bei der das Wasser 14 eine vorgegebene Temperatur, die nachfolgend auch als Soll-Temperatur bezeichnet wird, erreicht. Das heißt, dass bei der Referenzbestimmung 12 bei einer vorgegebenen Leistung des Wassererhitzers 1 für eine vorgegebene Wassermenge die Dauer bestimmt und als Referenz-Dauer festgelegt wird, bis die Wassermenge die Soll-Temperatur erreicht hat. Analog hierzu wird bei der Überwachung für die vorgegebene Wassermenge und die vorgegebene Leistung des Wassererhitzers 1 die Dauer überwacht, bei der die vorgegebene Wassermenge die Soll-Temperatur erreicht. Es wird dann die Differenz zwischen dieser Dauer und der Referenzdauer bestimmt. Sofern die bestimmte Differenz einer vorgegebenen Dauer-Differenz entspricht oder größer ist als die Dauer-Differenz, wird die Ermittlung 18 durchgeführt. In diesem Fall enthält die Tabelle 19 für zumindest eine vorgegebene Dauer-Differenz für verschiedene Gesamtwassermengen jeweils zugehörige Wasserhärten.

Beim in Figur 1 gezeigten Ausführungsbeispiel weist das Gerät 2 zum Bestimmen der mit dem Wassererhitzer 1 erhitzten Wassermenge eine Temperaturmesseinrichtung 21 auf, die im gezeigten Beispiel entlang des Strömungspfads 9 unmittelbar nach dem Wassererhitzer 1 im Kanal 10 angeordnet ist. Dabei wird der Wassererhitzer 1 zum Erhitzen des Wassers 4 und somit beim jeweiligen Heizvorgang von Wasser 4 durchströmt, wobei das Wasser 4 den Wassererhitzer 1 vorzugsweise mit einer vorgegebenen und konstanten Strömungsgeschwindigkeit durchströmt. Zum Bestimmen der von dem Wassererhitzer 1 erhitzten Wassermenge weist das Gerät 2 eine Wassermengenmesseinrichtung 22 auf, die in Figur 1 rein beispielhaft entlang des Strömungspfads 9 nach dem Wassererhitzer 1 angeordnet ist. Die Wassermengenmesseinrichtung 22 ist insbesondere als ein Durchflussmesser 23 ausgebildet oder weist zumindest einen solchen Durchflussmesser 23 auf. Das Gerät 2 weist ferner eine Steuereinrichtung 24 auf, die kommunizierend mit der Temperaturmesseinrichtung 21, der Wassermengenmesseinrichtung 22 sowie dem Wassererhitzer 1, insbesondere dem Heizkörper 7, verbunden ist, so dass die Steuereinrichtung 24 von diesen jeweils Werte abfragen und/oder sie ansteuern kann. Die Steuereinrichtung 24 ist dabei zum Durchführen des Verfahrens zum Ermitteln der Wasserhärte ausgestaltet.

Das gezeigte Gerät 2 weist ferner eine angedeutete Kommunikationsschnittstelle 25 auf, die ebenfalls kommunizierend mit der Steuereinrichtung 24 verbunden ist. Über die Kommunikationsschnittstelle 25 kommuniziert das Gerät 2 mit anderen Geräten 2 (siehe Figur 3) und insbesondere überträgt die ermittelte Wasserhärte.

Dementsprechend ist das Gerät 2 Bestandteil eines Geräteverbundes 26, der in Figur 3 beispielhaft gezeigt ist. Der Geräteverbund 26 umfasst mehrere Geräte 2, wobei zumindest eines der Geräte 2 ein solches der vorstehend beschriebenen Art ist, in dem die Wasserhärte ermittelt wird. Über die Kommunikationsschnittstellen 25 sind die Geräte 2 unmittelbar oder über einen nicht gezeigten Knoten kommunizierend miteinander verbunden, so dass insbesondere die ermittelte Wasserhärte über die Kommunikationsschnittstellen 25 zwischen den Geräten 2 ausgetauscht werden kann. Somit ist es insbesondere möglich, die Wasserhärte in einem der Geräte 2 zu ermitteln und an eines der anderen der Geräte 2 zu übermitteln. Somit ist es nicht notwendig, in jedem der Geräte 2 des Geräteverbunds 26 die Wasserhärte zu ermittelten. Alternativ oder zusätzlich ist es somit möglich, in unterschiedlichen Geräten 2 des Geräteverbunds 26 ermittelte Wasserhärten miteinander zu kombinieren, um Fehler beim Ermitteln der Wasserhärte zu reduzieren und/oder die Wasserhärte genauer zu bestimmen.

### Bezugszeichenliste

- 1: Wassererhitzer
- 2: Gerät
- 3: Haushaltsgerät
- 4: Wasser
- 5: Kalkablagerung
- 6: Heizdraht
- 7: Heizkörper
- 8: Gehäuse
- 9: Strömungspfad
- 10: Kanal
- 11: 1. Verfahrensmaßnahme
- 12: Referenzbestimmung
- 13: 2. Verfahrensmaßnahme
- 14: Überwachung
- 15: 3. Verfahrensmaßnahme
- 16: Vergleichsmaßnahme
- 17: 4. Verfahrensmaßnahme
- 18: Ermittlung
- 19: Tabelle
- 20: 5. Verfahrensmaßnahme
- 21: Temperaturmesseinrichtung
- 22: Wassermengenmesseinrichtung
- 23: Durchflussmesser
- 24: Steuereinrichtung
- 25: Kommunikationsschnittstelle
- 26: Geräteverbund

## Patentansprüche

1. Geräteverbund (26) mit zumindest zwei Geräten (2), insbesondere zumindest zwei Haushaltsgeräten (3), wobei die Geräte (2) jeweils einen Wassererhitzer (1) aufweisen; wobei das jeweilige Gerät (2) eine Kommunikationsschnittstelle (25) aufweist, über welche es im Betrieb mit den anderen Geräten (2) des Geräteverbunds (26) kommuniziert; wobei zumindest eines der Geräte (2) eine Wassermengenmesseinrichtung (22), eine Temperaturmesseinrichtung (21) und eine Steuereinrichtung (24) aufweist; wobei die Steuereinrichtung (24) je mit dem Wassererhitzer (1), der Wassermengenmesseinrichtung (22) und der Temperaturmesseinrichtung (21) kommunizierend verbunden ist, sodass die Steuereinrichtung (24) von diesen jeweils Werte abfragt und/oder sie ansteuert; wobei die Steuereinrichtung (24) zum Durchführen eines Verfahrensschritts zum Ermitteln der Wasserhärte programmiert ist und/oder entsprechende Algorithmen enthält und umsetzt; und wobei die Steuereinrichtung (24) derart programmiert ist und/oder entsprechende Algorithmen enthält und umsetzt, dass sie die ermittelte Wasserhärte über die Kommunikationsschnittstellen (25) an wenigstens eines anderen der Geräte (2) des Geräteverbunds (26) übermittelt.

2. Geräteverbund nach Anspruch 1, **dadurch gekennzeichnet, dass** zumindest zwei der wenigstens zwei Geräte (2) von derselben Wasserquelle gespeist sind.

3. Gerät (2) des Geräteverbunds (26) gemäß Anspruch 1 mit zumindest zwei Geräten (2), insbesondere Haushaltsgerät (3), wobei das Gerät (2) einen Wassererhitzer (1), eine Wassermengenmesseinrichtung (22) und eine Temperaturmesseinrichtung (21) und eine Kommunikationsschnittstelle (25) aufweist, über welche es im Betrieb mit anderen Geräten (2) eines Geräteverbunds (26) kommuniziert, wobei das Gerät (2) eine Steuereinrichtung (24) aufweist und die Steuereinrichtung (24) je mit dem Wassererhitzer (1), der Wassermengenmesseinrichtung (22) und der Temperaturmesseinrichtung (21) kommunizierend verbunden ist, sodass die Steuereinrichtung (24) von diesen jeweils Werte abfragt und/oder sie ansteuert; wobei die Steuereinrichtung (24) zum Durchführen eines Verfahrensschritts zum Ermitteln der Wasserhärte programmiert ist und/oder entsprechende Algorithmen enthält; und wobei die Steuereinrichtung (24) derart programmiert ist und/oder entsprechende Algorithmen enthält und umsetzt, dass sie die ermittelte Wasserhärte über die Kommunikationsschnittstellen (25) an wenigstens eines anderen der Geräte (2) des Geräteverbunds (26) übermittelt.

4. Verfahren zum Betreiben des Geräteverbunds (26) mit zumindest zwei Geräten (2) gemäß Anspruch 1, wobei das jeweilige Gerät (2) im Betrieb über die Kommunikationsschnittstelle (25) mit den anderen Geräten (2) des Geräteverbunds (26) kommuniziert; wobei zumindest eines der Geräte (2) die Wasserhärte des mit diesem Gerät (2) erhitzten Wassers ermittelt und die ermittelte Wasserhärte über die Kommunikationsschnittstellen (25) an wenigstens eines anderen der Geräte (2) des Geräteverbunds (26) übermittelt, wobei die Steuereinrichtung (24) je mit dem Wassererhitzer (1), der Wassermengenmesseinrichtung (22) und der Temperaturmesseinrichtung (21) kommuniziert, und wobei die Steuereinrichtung (24) den Verfahrensschritt zum Ermitteln der Wasserhärte durchführt.

5. Verfahren nach Anspruch 4, **dadurch gekennzeichnet, dass** das Ermitteln der Wasserhärte im Wassererhitzer (1) des zumindest einen Geräts (2) erfolgt und folgende Verfahrensmaßnahmen umfasst: Referenzbestimmung (12) einer vom Wassererhitzer (1) verrichteten thermischen Referenz-Arbeit zum Erreichen einer Referenztemperatur im mit dem Wassererhitzer (1) erhitzten Wasser (4); Überwachung (14) der vom Wassererhitzer (1) verrichteten thermischen Arbeit zum Erreichen einer Temperatur im Wasser (4) und Überwachen der vom Wassererhitzer (1) erhitzten Wassermenge; Vergleichen der überwachten thermischen Arbeit mit der thermischen Referenz-Arbeit, und wenn die Differenz zwischen der überwachten thermischen Arbeit und der Referenz-Arbeit eine vorgegebene Arbeits-Differenz erreicht: Ermitteln einer Menge der Kalkablagerung (5) am Wassererhitzer (1); Bestimmen der zwischen der Referenzbestimmung (12) und dem Erreichen der vorgegebenen Arbeits-Differenz vom Wassererhitzer (1) erhitzten Gesamtwassermenge; Ermitteln der Wasserhärte aus einem Vergleich zwischen der Menge der Kalkablagerung (5) und der Gesamtwassermenge.

6. Verfahren nach Anspruch 5, **dadurch gekennzeichnet, dass** eine Tabelle (19) hinterlegt wird, welche für die vorgegebene Arbeits-Differenz für unterschiedliche Gesamtwassermengen die zugehörige Wasserhärte wiedergibt, wobei die Wasserhärte mit der bestimmten Gesamtwassermenge aus der Tabelle (19) ermittelt wird.

7. Verfahren nach Anspruch 5 oder 6, **dadurch gekennzeichnet, dass** Wasser (4) zum Erhitzen durch den Wassererhitzer (1) strömt, wobei zum Überwachen der Wassermenge die durch den Wassererhitzer (1) strömende und erhitzte Durchflussmenge überwacht wird.

8. Verfahren nach Anspruch 7, **dadurch gekennzeichnet, dass** bei der Referenzbestimmung (12) und bei der Überwachung (14) das Wasser (4) mit einer vorgegebenen Strömungsgeschwindigkeit durch den Wassererhitzer (1) strömt.

9. Verfahren nach einem der Ansprüche 5 bis 8, **dadurch gekennzeichnet, dass** bei der Referenzbestimmung (12) eine vom Wassererhitzer (1) verrichtete Referenz-Leistung zum Erreichen einer vorgegebenen Zieltemperatur als Referenztemperatur in einer vorgegebenen Wassermenge und in einer vorgegebenen Dauer bestimmt wird; und dass bei der Überwachung (14) für die vorgegebene Wassermenge die vom Wassererhitzer (1) verrichtete Leistung zum Erreichen der Zieltemperatur in der vorgegebenen Dauer überwacht wird; und dass beim Erreichen einer vorgegebenen Leistungs-Differenz zwischen der Referenz-Leistung und der überwachten Leistung Menge der Kalkablagerung (5) ermittelt sowie die Gesamtwassermenge bestimmt wird und daraus die Wasserhärte ermittelt wird.

10. Verfahren nach einem der Ansprüche 5 bis 8, **dadurch gekennzeichnet, dass** bei der Referenzbestimmung (12) bei einer vorgegebenen Leistung des Wassererhitzers (1) eine Referenz-Dauer bestimmt wird, bei der bei einer vorgegebenen Wassermenge eine vorgegebene Soll-Temperatur des Wassers (4) als Referenztemperatur erreicht ist; und dass bei der Überwachung (14) die Dauer überwacht wird, bei welcher der Wassererhitzter (1) bei der vorgegebenen Leistung in der vorgegebenen Wassermenge die Soll-Temperatur erreicht; dass beim Erreichen einer vorgegebenen Dauer-Differenz zwischen der Referenz-Dauer und der überwachten Dauer die Menge der Kalkablagerung (5) ermittelt sowie die Gesamtwassermenge bestimmt und daraus die Wasserhärte ermittelt wird.

11. Verfahren nach einem der Ansprüche 5 bis 10, **dadurch gekennzeichnet, dass** die ermittelte Wasserhärte mit einer hinterlegten Wasserhärte verglichen und bei einer vorgegebenen Abweichung die hinterlegte Wasserhärte durch die ermittelte Wasserhärte ersetzt wird.

## Claims

1. Appliance system (26) having at least two appliances (2), in particular at least two household appliances (3), the appliances (2) each having a water heater (1); the respective appliance (2) having a communication interface (25), by way of which it communicates with the other appliances (2) in the appliance system (26) during operation; at least one of the appliances (2) having a water quantity meter facility (22), a temperature meter facility (21) and a control facility (24); the control facility (24) being connected to each of the water heater (1), the water quantity meter facility (22) and the temperature meter facility (21) for communication purposes, so that the control facility (24) can request values from them and/or activate them; the control facility (24) being programmed and/or containing and implementing corresponding algorithms to perform a method step to identify water hardness; and the control facility (24) being programmed and/or containing and implementing corresponding algorithms so that it transmits the identified water hardness to at least one of the other appliances (2) in the appliance system (26) by way of the communication interface (25).

2. Appliance system (26) according to claim 1, **characterised in that** at least two of the at least two appliances (2) are supplied by the same water source.

3. Appliance (2) of the appliance system (26) according to claim 1 having at least two appliances (2), in particular a household appliance (3), the appliance (2) having a water heater (1), a water quantity meter facility (22) and a temperature meter facility (21) and a communication interface (25), by way of which it communicates with other appliances (2) of an appliance system (26) during operation, the appliance (2) having a control facility (24) and the control facility (24) being connected to each of the water heater (1), the water quantity meter facility (22) and the temperature meter facility (21) for communication purposes, so that the control facility (24) can request values from them and/or activate them; the control facility (24) being programmed and/or containing corresponding algorithms to perform a method step to identify water hardness; and the control facility (24) being programmed and/or containing and implementing corresponding algorithms so that it transmits the identified water hardness to at least one of the other appliances (2) in the appliance system (26) by way of the communication interfaces (25).

4. Method for operating the appliance system (26) having at least two appliances (2) according to claim 1, the respective appliance (2) communicating with the other appliances (2) in the appliance system (26) by way of the communication interface (25) during operation; at least one of the appliances (2) identifying the water hardness of the water heated using said appliance (2) and transmitting the identified water hardness to at least one of the other appliances (2) in the appliance system (26) by way of the communication interfaces (25), the control facility (24) communicating with each of the water heater (1), the water quantity meter facility (22) and the temperature meter facility (21) and the control facility (24) performing the method step to identify water hardness.

5. Method according to claim 4, **characterised in that** the identification of water hardness takes place in the water heater (1) of the at least one appliance (2) and comprises the following method measures: reference determination (12) of thermal reference work performed by the water heater (1) to reach a reference temperature in the water (4) heated using the water heater (1); monitoring (14) of the thermal work performed by the water heater (1) to reach a temperature in the water (1) and monitoring of the quantity of water heated by the water heater (1); comparing the monitored thermal work with the thermal reference work and, when the difference between the monitored thermal work and the reference work reaches a predetermined work difference: identifying an amount of calcification (5) at the water heater (1); determining the total water quantity heated by the water heater (1) between the reference determination (12) and reaching the predetermined work difference; identifying the water hardness from a comparison between the amount of calcification (5) and the total water quantity.

6. Method according to claim 5, **characterised in that** a table (19) is stored, showing the associated water hardness for the predetermined work difference for different total water quantities, the water hardness being identified with the determined total water quantity from the table (19).

7. Method according to claim 5 or 6, **characterised in that** the water (4) flows through the water heater (1) for heating purposes, the quantity flowing through the water heater (1) and being heated being monitored to monitor the water quantity.

8. Method according to claim 7, **characterised in that** during the reference determination (12) and monitoring (14) the water (4) flows through the water heater (1) at a predetermined flow speed.

9. Method according to one of claims 5 to 8, **characterised in that** during the reference determination (12) a reference power supplied by the water heater (1) to reach a predetermined target temperature as reference temperature in a predetermined quantity of water and over a predetermined period is determined; and during monitoring (14) the power supplied by the water heater (1) to reach the target temperature over the predetermined period is monitored for the predetermined water quantity; and when a predetermined power difference between the reference power and the monitored power is reached, the amount of calcification (5) is identified and the total water quantity is determined, the water hardness being identified therefrom.

10. Method according to one of claims 5 to 8, **characterised in that** during the reference determination (12) for a predetermined power of the water heater (1) a reference period is determined, during which a predetermined setpoint temperature of the water (4) is reached as the reference temperature for a predetermined quantity of water; and during monitoring (14) the period is monitored, during which the water heater (1) reaches the setpoint temperature at a predetermined power in the predetermined quantity of water; when a predetermined period difference between the reference period and the monitored period is reached, the amount of calcification (5) is identified and the total water quantity determined, the water hardness being identified therefrom.

11. Method according to one of claims 5 to 10, **characterised in that** the identified water hardness is compared with a stored water hardness and in the case of a predetermined difference the stored water hardness is replaced by the identified water hardness.

## Revendications

1. Ensemble d'appareils (26) avec au moins deux appareils (2), en particulier au moins deux appareils ménagers (3), dans lequel les appareils (2) présentent respectivement un chauffe-eau (1) ; dans lequel l'appareil respectif (2) présente une interface de communication (25) via laquelle il communique en fonctionnement avec les autres appareils (2) de l'ensemble d'appareils (26) ; dans lequel au moins l'un des appareils (2) présente un dispositif de mesure de quantité d'eau (22), un dispositif de mesure de température (21) et un dispositif de commande (24) ; dans lequel le dispositif de commande (24) est respectivement relié de façon communicante au chauffe-eau (1), au dispositif de mesure de quantité d'eau (22) et au dispositif de mesure de température (21), de sorte que le dispositif de commande (24) extrait respectivement des valeurs de ceux-ci et/ou les commande ; dans lequel le dispositif de commande (24) est programmé afin de réaliser une étape de procédé pour la détermination de la dureté de l'eau et/ou contient et applique des algorithmes correspondants ; et dans lequel le dispositif de commande (24) est programmé et/ou contient et applique des algorithmes correspondants de telle sorte qu'il transmet la dureté de l'eau déterminée via les interfaces de communication (25) à au moins l'un des autres parmi les appareils (2) de l'ensemble d'appareils (26).

2. Ensemble d'appareils selon la revendication 1, **caractérisé en ce qu'**au moins deux des au moins deux appareils (2) sont alimentés par la même source.

3. Appareil (2) de l'ensemble d'appareils (26) selon la revendication 1 avec au moins deux appareils (2), en particulier appareil ménager (3), dans lequel l'appareil (2) présente un chauffe-eau (1), un dispositif de mesure de quantité d'eau (22) et un dispositif de mesure de température (21) et une interface de communication (25), via laquelle il communique en fonctionnement avec les autres appareils (2) d'un ensemble d'appareils (26) ; dans lequel l'appareil (2) présente un dispositif de commande (24) et le dispositif de commande (24) est respectivement relié de façon communicante au chauffe-eau (1), au dispositif de mesure de quantité d'eau (22) et au dispositif de mesure de température (21), de sorte que le dispositif de commande (24) extrait respectivement des valeurs de ceux-ci et/ou les commande ; dans lequel le dispositif de commande (24) est programmé afin de réaliser une étape de procédé pour la détermination de la dureté de l'eau et/ou contient des algorithmes correspondants ; et dans lequel le dispositif de commande (24) est programmé et/ou contient et applique des algorithmes correspondants de telle sorte qu'il transmet la dureté de l'eau déterminée via les interfaces de communication (25) à au moins l'un des autres parmi les appareils (2) de l'ensemble d'appareils (26).

4. Procédé d'exploitation de l'ensemble d'appareils (26) avec au moins deux appareils (2) selon la revendication 1, dans lequel l'appareil respectif (2) communique en fonctionnement via l'interface de communication (25) avec les autres appareils (2) de l'ensemble d'appareils (26) ; dans lequel au moins l'un des appareils (2) détermine la dureté de l'eau chauffée avec cet appareil (2) et transmet la dureté de l'eau déterminée via les interfaces de communication (25) à au moins l'un des autres parmi les appareils (2) de l'ensemble d'appareils (26), dans lequel le dispositif de commande (24) communique respectivement avec le chauffe-eau (1), le dispositif de mesure de quantité d'eau (22) et le dispositif de mesure de température (21) et dans lequel le dispositif de commande (24) réalise l'étape de procédé pour la détermination de la dureté de l'eau.

5. Procédé selon la revendication 4, **caractérisé en ce que** la détermination de la dureté de l'eau dans le chauffe-eau (1) de l'au moins un appareil (2) s'effectue et comprend les mesures procédurales suivantes : établissement de référence (12) d'un travail de référence thermique effectué par le chauffe-eau (1) pour l'atteinte d'une température de référence dans l'eau (4) chauffée par le chauffe-eau (1) ; surveillance (14) du travail thermique effectué par le chauffe-eau (1) pour l'atteinte d'une température dans l'eau (4) et surveillance de la quantité d'eau chauffée par le chauffe-eau (1) ; comparaison du travail thermique surveillé avec le travail de référence thermique et lorsque la différence entre le travail thermique surveillé et le travail de référence atteint une différence de travail prédéterminée :
détermination d'une quantité du dépôt calcaire (5) sur le chauffe-eau (1) ; établissement de la quantité d'eau totale chauffée par le chauffe-eau (1) entre l'établissement de référence (12) et l'atteinte de la différence de travail prédéterminée ; détermination de la dureté de l'eau au départ d'une comparaison entre la quantité du dépôt calcaire (5) et la quantité d'eau totale.

6. Procédé selon la revendication 5, **caractérisé en ce qu'**un tableau (19) est enregistré, lequel indique pour la différence de travail prédéterminée la dureté de l'eau correspondante pour différentes quantités d'eau totales, dans lequel la dureté de l'eau est déterminée avec la quantité d'eau totale établie au départ du tableau (19).

7. Procédé selon la revendication 5 ou 6, **caractérisé en ce que** l'eau (4) à chauffer s'écoule à travers le chauffe-eau (1), dans lequel le débit s'écoulant à travers le chauffe-eau (1) et chauffé est surveillé pour la surveillance de la quantité d'eau.

8. Procédé selon la revendication 7, **caractérisé en ce que** lors de l'établissement de référence (12) et lors de la surveillance (14), l'eau (4) s'écoule à travers le chauffe-eau (1) selon une vitesse d'écoulement prédéterminée.

9. Procédé selon l'une des revendications 5 à 8, **caractérisé en ce que** lors de l'établissement de référence (12) une puissance de référence fournie par le chauffe-eau (1) pour l'atteinte d'une température cible prédéterminée est établie sous forme de température de référence dans une quantité d'eau prédéterminée et pendant une durée prédéterminée ; et **en ce que** lors de la surveillance (14) pour la quantité d'eau prédéterminée la puissance fournie par le chauffe-eau (1) pour l'atteinte de la température cible est surveillée pendant la durée prédéterminée ; et **en ce qu'**à l'atteinte d'une différence de puissance prédéterminée entre la puissance de référence et la puissance surveillée, la quantité du dépôt calcaire (5) est déterminée, la quantité d'eau totale est établie et la dureté de l'eau est déterminée au départ de ces éléments.

10. Procédé selon l'une des revendications 5 à 8, **caractérisé en ce que** lors de l'établissement de référence (12), en présence d'une puissance prédéterminée du chauffe-eau (1), une durée de référence est établie, à l'écoulement de laquelle, en présence d'une quantité d'eau prédéterminée, une température de consigne prédéterminée de l'eau (4) est atteinte sous forme de température de référence ; et **en ce que** lors de la surveillance (14), la durée à l'écoulement de laquelle le chauffe-eau (1) atteint la température de consigne dans la quantité d'eau prédéterminée en présence de la puissance prédéterminée est surveillée ; **en ce qu'**à l'atteinte d'une différence de durée prédéterminée entre la durée de référence et la durée surveillée, la quantité du dépôt calcaire (5) est déterminée, la quantité d'eau totale est établie et la dureté de l'eau est déterminée au départ de ces éléments.

11. Procédé selon l'une des revendications 5 à 10, **caractérisé en ce que** la dureté de l'eau déterminée est comparée avec une dureté de l'eau enregistrée et la dureté de l'eau enregistrée est remplacée par la dureté de l'eau déterminée en présence d'une divergence prédéterminée.
